(19) Europäisches Patentamt
European Patent Office
Office européen des brevets

(11) EP 2 413 608 A2

(12) EUROPEAN PATENT APPLICATION

(43) Date of publication:
01.02.2012 Bulletin 2012/05

(51) Int Cl.:
H04N 13/00 (2006.01)

(21) Application number: 11170673.5

(22) Date of filing: 21.06.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 30.07.2010 JP 2010172037

(71) Applicant: Sony Corporation
Tokyo 108-0075 (JP)

(72) Inventors:
• Kuwayama, Tetsuro
Minato-ku, Tokyo 108-0075 (JP)

• Minami, Masaru
Minato-ku, Tokyo 108-0075 (JP)
• Nagai, Hiroyuki
Minato-ku, Tokyo 108-0075 (JP)
• Sato, Yoshihisa
Minato-ku, Tokyo 108-0075 (JP)

(74) Representative: Ealey, Douglas Ralph
D Young & Co LLP
120 Holborn
London EC1N 2DY (GB)

(54) **Stereoscopic image display apparatus**

(57) An image display apparatus includes: a transmissive display panel; a planar illumination device that illuminates the transmissive display panel from a rear side; and a parallax barrier that is provided between the transmissive display panel and the planar illumination device and separates an image displayed on the transmissive display panel into images for plural viewpoints, wherein the parallax barrier and the transmissive display panel are provided to be opposed at a predetermined distance, and an antireflection coating is provided on at least one of a surface of the transmissive display panel opposed to the parallax barrier and a surface of the parallax barrier opposed to the transmissive display panel.

[EMBODIMENT 1]
*FIG.3A*

# FIG.3B

**Description**

The present disclosure relates to a stereoscopic image display apparatus.

In related art, various stereoscopic image display apparatuses that realize stereoscopic views by observation of two images with parallax by image observers are known. The systems of the stereoscopic image display apparatuses are roughly divided into glasses systems that separately input parallax images to right and left eyes using glasses and naked-eye systems (glasses-free systems) that input parallax images to right and left eyes without using glasses.

As the naked-eye stereoscopic image display devices, lenticular stereoscopic image display apparatuses using image display units (two-dimensional image display devices) in combination with lenticular lenses and parallax barrier stereoscopic image display apparatuses using image display units in combination with parallax barriers are being put into practical use.

The parallax barrier stereoscopic image display apparatus generally includes an image display unit having a display panel with plural pixels arranged in a two-dimensional matrix in the horizontal direction (lateral direction) and the vertical direction (longitudinal direction) etc., and a parallax barrier having light blocking parts and slit-like openings extending in the vertical direction.

The parallax barrier stereoscopic image display apparatuses are roughly divided into, for example, apparatuses in which the parallax barrier is provided between the image display unit and the image observer as shown in Fig. 7 in JP-A-5-122733 (Patent Document 1) (hereinafter, referred to as "front-barrier stereoscopic image display apparatus") and, for example, apparatuses in which the image display unit includes a transmissive display panel such as a transmissive liquid crystal display panel and a planar illumination device and the parallax barrier is provided between the transmissive display panel and the planar illumination device as shown in Fig. 10 of Japanese Patent No. 3565391 (Patent Document 2) (hereinafter, referred to as "rear-barrier stereoscopic image display apparatus").

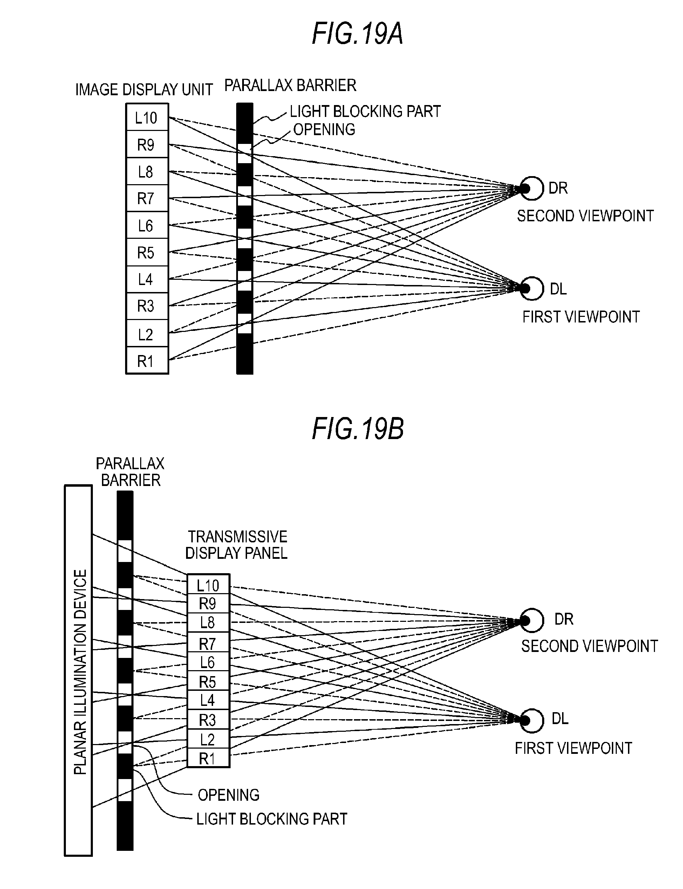

Fig. 19A is a conceptual diagram of a front-barrier stereoscopic image display apparatus. Fig. 19B is a conceptual diagram of a rear-barrier stereoscopic image display apparatus.

As shown in Fig. 19A, in the front-barrier stereoscopic image display apparatus, a group of light beams output from a group of pixels with signs L2, L4, L6, L8, L10 reach a first viewpoint DL through openings of a parallax barrier. Further, a group of light beams output from a group of pixels with signs R1, R3, R5, R7, R9 reach a second viewpoint DR through the openings of the parallax barrier. The broken lines show trajectories of the light beams blocked by light blocking parts of the parallax barrier.

As shown in Fig. 19B, in the rear-barrier stereoscopic image display apparatus, light of a planar illumination device passing through openings of a parallax barrier is transmitted through a group of pixels with signs L2, L4, L6, L8, L10 and reaches a first viewpoint DL. Further, the light of the planar illumination device passing through the openings of the parallax barrier is transmitted through a group of pixels with signs R1, R3, R5, R7, R9 and reaches a second viewpoint DR. The broken lines show trajectories of the light beams blocked by light blocking parts of the parallax barrier.

In Figs. 19A and 19B, it is assumed that a left eye of the image observer is at the first viewpoint and a right eye of the image observer is at the second viewpoint. When images for left eye are displayed by the group of pixels with signs L2, L4, L6, L8, L10 and images for right eye are displayed by the group of pixels with signs R1, R3, R5, R7, R9 at the same time, the image observer recognizes the images as stereoscopic images.

In the front-barrier stereoscopic image display apparatus, the parallax barrier is located at the image observer side, the parallax barrier hinders the vision for observation of the images. On the other hand, in the rear-barrier stereoscopic image display apparatus, the image observer observes the surface of the transmissive display panel, and the parallax barrier does not hinder the vision.

As described above, the rear-barrier stereoscopic image display apparatus has an advantage that the parallax barrier does not hinder the vision. However, in the rear-barrier stereoscopic image display apparatus, there is a problem that the directionality of parallax images is degraded compared to that of the front-barrier stereoscopic image display apparatus.

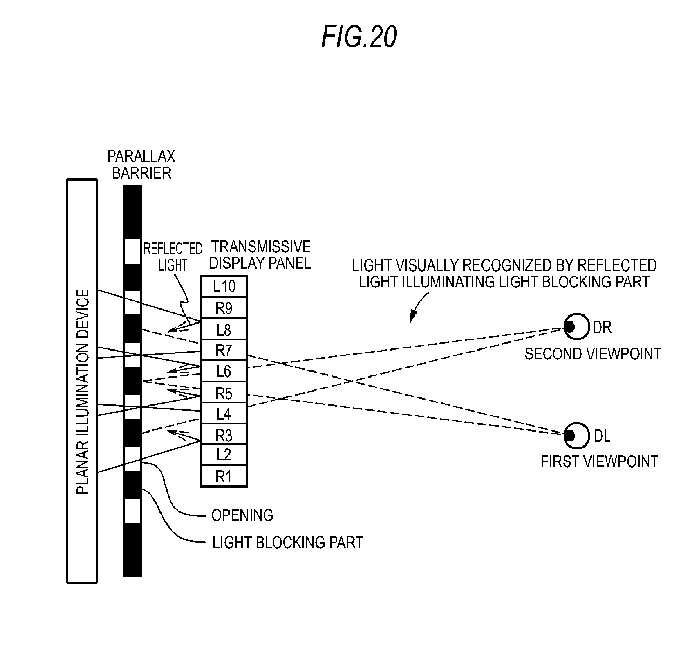

Fig. 20 is a schematic diagram for explanation of degradation of the directionality of parallax images by the light reflected on the surface of the transmissive display panel.

As shown in Fig. 20, when the light from the planar illumination device enters the transmissive display panel, part of the light is reflected to be reflected light illuminating the parallax barrier. The reflected light illuminates the light blocking parts of the parallax barrier, and, as a result, the brightness of the light blocking parts is visually recognized to be higher. Then, the light from the light blocking parts is transmitted through the group of pixels with signs L2, L4, L6, L8, L10 and reaches the second viewpoint DR, not the proper viewpoint, and transmitted through the group of pixels with signs R1, R3, R5, R7, R9 and reaches the first viewpoint DL, not the proper viewpoint. Thereby, the directionality of the parallax images is degraded. Note that, for convenience of illustration, the light transmitted through the signs L4, R5, L6, R7 is representatively shown in Fig. 20.

Therefore, it is desirable to provide a rear-barrier stereoscopic image display apparatus that can reduce the degradation of the directionality of the parallax images.

Various respective aspects and features of the invention are defined in the appended claims. Combinations of features from the dependent claims may be combined with features of the independent claims as appropriate and not merely as explicitly set out in the claims.

Embodiments of the present disclosure relate to a stereoscopic image display apparatus, and specifically, to the so-called naked-eye stereoscopic image display apparatus.

A stereoscopic image display apparatus according to an embodiment of the present disclosure includes a transmissive display panel, a planar illumination device that illuminates the transmissive display panel from a rear side, and a parallax barrier that is provided between the transmissive display panel and the planar illumination device and separates an image displayed on the transmissive display panel into images for plural viewpoints, wherein the parallax barrier and the transmissive display panel are provided to be opposed at a predetermined distance, and an antireflection coating is provided on at least one of a surface of the transmissive display panel opposed to the parallax barrier and a surface of the parallax barrier opposed to the transmissive display panel.

In the stereoscopic image display apparatus according to the embodiment of the present disclosure, the antireflection coating is provided on at least one of the surface of the transmissive display panel opposed to the parallax barrier and the surface of the parallax barrier opposed to the transmissive display panel. Thereby, the influence of the reflected light in the light blocking parts may be reduced, and the degradation of directionality of parallax images may be reduced.

Embodiments of the invention will now be described with reference to the accompanying drawings, throughout which like parts are referred to by like references, and in which:

Fig. 1 is a schematic perspective view when a stereoscopic image display apparatus of embodiment 1 is virtually separated.

Fig. 2 is a schematic end surface view of a part of the stereoscopic image display apparatus for explanation of an arrangement relation among a transmissive display panel, a parallax barrier, and a planar illumination device in the stereoscopic image display apparatus of embodiment 1.

Fig. 3A is a schematic diagram for explanation of reflected light illuminating the parallax barrier when no antireflection coating is provided. Fig. 3B is a schematic diagram for explanation of reduction of the reflected light illuminating the parallax barrier and reduction of brightness of light blocking parts when an antireflection coating is provided.

Fig. 4 is a schematic plan view for explanation of an arrangement relation among viewpoints D1, D2, D3, D4 in observation areas, the transmissive display panel, the parallax barrier, and the planar illumination device shown in Fig. 1.

Fig. 5 is a schematic diagram for explanation of a condition satisfied so that lights from pixels may travel toward the viewpoints D1, D2, D3, D4 in the center observation area.

Fig. 6 is a schematic diagram for explanation of a condition satisfied so that lights from pixels may travel toward the viewpoints D1, D2, D3, D4 in the left observation area.

Fig. 7 is a schematic diagram for explanation of images observed at the viewpoints D1, D2, D3, D4 in the center observation area.

Fig. 8 is a schematic diagram for explanation of images observed at the viewpoints D1, D2, D3, D4 in the left observation area.

Fig. 9 is a schematic diagram for explanation of images observed at the viewpoints D1, D2, D3, D4 in the right observation area.

Fig. 10 is a schematic perspective view when a stereoscopic image display apparatus of embodiment 2 is virtually separated.

Fig. 11 is a schematic end surface view of a part of the stereoscopic image display apparatus for explanation of an arrangement relation among a transmissive display panel, a parallax barrier, and a planar illumination device in the stereoscopic image display apparatus of embodiment 2.

Fig. 12 is a schematic diagram for explanation of reduction of brightness of light blocking parts when an antireflection coating is provided.

Fig. 13 is a schematic end surface view of the part of the stereoscopic image display apparatus for explanation of an arrangement relation among the transmissive display panel, the parallax barrier, and the planar illumination device in the stereoscopic image display apparatus of embodiment 2.

Fig. 14 is a schematic perspective view when a stereoscopic image display apparatus of embodiment 3 is virtually separated.

Fig. 15 is a schematic end surface view of a part of the stereoscopic image display apparatus for explanation of an arrangement relation among a transmissive display panel, a parallax barrier, and a planar illumination device in the stereoscopic image display apparatus of embodiment 3.

Fig. 16 is a schematic end surface view of the part of the stereoscopic image display apparatus for explanation of an arrangement relation among the transmissive display panel, the parallax barrier, and the planar illumination device in the stereoscopic image display apparatus of embodiment 3.

Fig. 17 is a schematic perspective view when a stereoscopic image display apparatus of a modified example is virtually separated.

Fig. 18 is a schematic perspective view when a stereoscopic image display apparatus of a modified example is virtually separated.

Fig. 19A is a conceptual diagram of a front-barrier stereoscopic image display apparatus. Fig. 19B is a conceptual diagram of a rear-barrier stereoscopic image display apparatus.

Fig. 20 is a schematic diagram for explanation of the degradation of the directionality of parallax images by the light reflected on the surface of the transmissive display panel.

The present disclosure will be explained below according to embodiments with reference to the drawings. However, the present disclosure is not limited to the embodiments, and various numeric values and materials in the embodiments are shown for illustrative purposes. The explanation will be made in the following order.

1. General Explanation of Stereoscopic Image Display Apparatus of the Present Disclosure
2. Embodiment 1 (Stereoscopic Image Display Apparatus of the Present Disclosure)
3. Embodiment 2
4. Embodiment 3 (Others)

[General Explanation of Stereoscopic Image Display Apparatus of the Present Disclosure]

A stereoscopic image display apparatus of the present disclosure may have a configuration in which an antireflection coating is provided on a surface of a transmissive display panel opposed to a parallax barrier. According to the configuration, when light from a planar illumination device enters the transmissive display panel, the reflected light reflected to illuminate the parallax barrier may be reduced. Thereby, the influence of the reflected light in light blocking parts may be reduced and the degradation of directionality of parallax images may be reduced.

Alternatively, a stereoscopic image display apparatus of an embodiment of the present disclosure may have a configuration in which the antireflection coating is provided on a surface of the parallax barrier opposed to the transmissive display panel. According to the configuration, if the reflected light reflected by the surface of the transmissive display panel illuminates the parallax barrier, the light traveling from the light blocking parts toward the transmissive display panel side may be reduced. Thereby, the influence of the reflected light in the light blocking parts may be reduced and the degradation of directionality of parallax images may be reduced. In this case, the parallax barrier may have the light blocking parts and openings and the antireflection coating may be provided only in the parts corresponding to the light blocking parts of the parallax barrier.

Alternatively, a stereoscopic image display apparatus of an embodiment of the present disclosure may have a configuration in which the antireflection coatings are provided on the surface of the transmissive display panel opposed to the parallax barrier and the surface of the parallax barrier opposed to the transmissive display panel. According to the configuration, both the effect by providing the antireflection coating on the surface of the transmissive display panel and the effect by providing the antireflection coating on the surface of the parallax barrier are exerted, and the degradation of directionality of parallax images may be further reduced. Note that, in this case, the parallax barrier may have the light blocking parts and the openings and the antireflection coating provided on the surface of the parallax barrier may be provided only in the parts corresponding to the light blocking parts of the parallax barrier.

In the stereoscopic image display apparatuses of the embodiment of the present disclosure having the above described various preferable configurations (hereinafter, the apparatuses may be simply referred to as " the embodiment of the present disclosure"), the antireflection coating may be provided directly on the surface of the parallax barrier and the surface of the transmissive display panel, or the antireflection coating may be provided with a sheet-like transparent separate member in between on the member. As a transparent material forming the separate member, a widely known material such as polyethylene terephthalate (PET) or triacetylcellulose (TAC) may be used. In the present disclosure, the configuration of the antireflection coating is not particularly limited and a widely known antireflection coating may be used.

The antireflection coating generally has a configuration to reduce the reflectance using the principal of optical interference, and, for example, may be formed by a single-layer thin film or formed by stacking plural thin films having different refractive indices. As materials forming the thin films, widely known materials may be used. As a material forming a layer with a relatively low refractive index, for example, magnesium fluoride may be cited, and, as a material forming a layer with a relatively high refractive index, for example, titanium oxide or tantalum oxide may be cited. Further, these thin films may be formed using widely known methods. For example, known methods such as chemical vapor deposition methods (CVD methods) including the MOCVD method and physical vapor deposition methods (PVD methods) may be cited.

Furthermore, the antireflection coating having a configuration in which two or more kinds of ultrafine particles (for example, magnesium fluoride and silicon oxide) are mixed and the mixing ratio thereof is varied in the thickness direction may be used. Alternatively, the antireflection coating having the so-called "moth-eye" structure in which a concavo-convex structure less than wavelengths of light is formed and the average refractive index gradually changes may be used.

The configuration, arrangement, etc. of the parallax barrier may be appropriately set according to the specifications or the like of the stereoscopic image display apparatus. The parallax barrier may have a dynamically switchable configuration or a fixed configuration. For example, light valves using liquid crystal materials may form a parallax barrier that can be electrically and dynamically switched. A parallax barrier having a fixed configuration may be formed using a known material by a known method using a combination of photolithography and etching, various printing methods such as a screen printing method, inkjet printing method, or a metal mask printing method, a plating method (electric plating or electroless plating), a liftoff method, or the like. The parallax barrier may be formed as an independent member or a member integrated with another member.

In the embodiment of the present disclosure, a widely known planar illumination device may be used. The configuration of the planar illumination device is not particularly limited. Generally, the planar illumination device may include known members such as a light source, a prism sheet, a diffusion sheet, and a light guide plate.

In the embodiment of the present disclosure, a known transmissive display panel such as a liquid crystal display panel may be used. The configuration and the system of the transmissive display panel is not particularly limited. The transmissive display panel may provide monochrome representation or color representation. Further, a simple matrix system or an active matrix system may be used therefor. In the respective embodiments described as below, an active matrix liquid crystal display panel may be used as the transmissive display panel.

The liquid crystal display panel includes a front panel having a transparent first electrode, a rear panel having a transparent second electrodes, and a liquid crystal material provided between the front panel and the rear panel, for example. The transmissive display panel of the embodiments of the present disclosure includes the so-called semi-transmissive liquid crystal display panel in which each pixel has a reflection area and a transmission area.

Here, more specifically, the front panel includes a first substrate of a glass substrate, the transparent first electrode provided on the inner surface of the first substrate (also referred to as "common electrode" including ITO (indium tin oxide), for example), and a polarizing film provided on the outer surface of the first substrate, for example. Further, in a color liquid crystal display panel, the front panel has a configuration in which color filters covered by an overcoat layer of an acrylic resin or an epoxy resin is provided on the inner surface of the first substrate and the transparent first electrode is formed on the overcoat layer. An orientation film is formed on the transparent first electrode. As an arrangement pattern of the color filters, a delta arrangement, a stripe arrangement, a diagonal arrangement, or a rectangle arrangement may be cited.

On the other hand, more specifically, the rear panel includes a second substrate of a glass substrate, switching devices formed on the inner surface of the second substrate, the transparent second electrodes (also referred to as "pixel electrodes" and formed by ITO) controlled to be conductive or non-conductive by the switching devices, and a polarizing film provided on the outer surface of the second substrate. On the entire surface containing the transparent second electrodes, an orientation film is formed. Various kinds of members and liquid crystal materials forming the transmissive liquid crystal display panel may include known members and materials. Note that, as the switching device, a three-terminal device such as a thin film transistor (TFT), a two-terminal device such as an MIM (metal insulator metal) device, a varistor device, or a diode may be exemplified.

Note that, in the color liquid crystal display panel, an area as an overlapping area of the transparent first electrode and the transparent second electrode including a liquid crystal cell corresponds to one sub-pixel. Further, a red light emission sub-pixel forming each pixel includes a combination of the area and a color filter that transmits red, a green light emission sub-pixel includes a combination of the area and a color filter that transmits green, and a blue light emission sub-pixel includes a combination of the area and a color filter that transmits blue. The arrangement pattern of the red light emission sub-pixels, the green light emission sub-pixels, and the blue light emission sub-pixels is the same as the above described arrangement pattern of color filters.

Furthermore, one set including these three kinds of sub-pixels and additional one kind or plural kinds of sub-pixels (for example, one set including an additional sub-pixel that emits white light for improvement of brightness, one set including an additional sub-pixel that emits a complementary color for expansion of a color reproduction range, one set including an additional sub-pixel that emits yellow for expansion of the color reproduction range, one set including additional sub-pixels that emit yellow and cyan) may form the pattern.

When the number $M \times N$ of pixels arranged in a two-dimensional matrix is expressed by (M,N), as values of (M,N), specifically, some of resolution for image display such as VGA (640,840), S-VGA (800,600), XGA (1024,768), APRC (1152,900), S-XGA (1280,1024), U-XGA (1600,1200), HD-TV (1920,1080), Q-XGA (2048,1536), and (1920,1035), (720,480), (1280,960), etc. may be exemplified, however, the resolution is not limited to these values.

Driving means for driving the planar illumination device and the transmissive display panel may include various circuits of an image signal processing unit, a timing control unit, a data driver, a gate driver, and a light source control unit, for example. They may be formed using known circuit elements or the like.

[Embodiment 1]

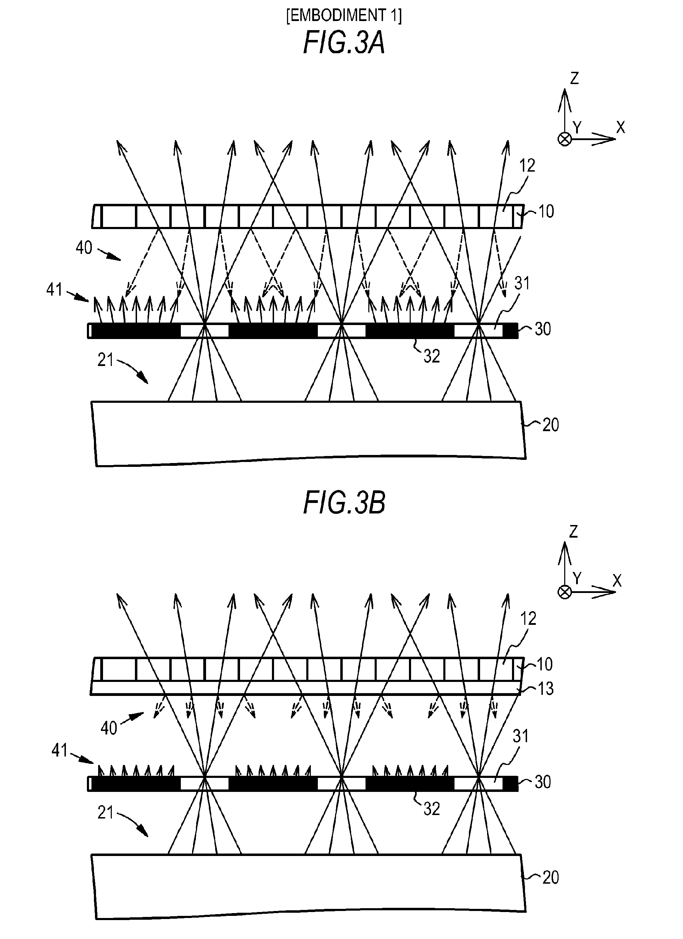

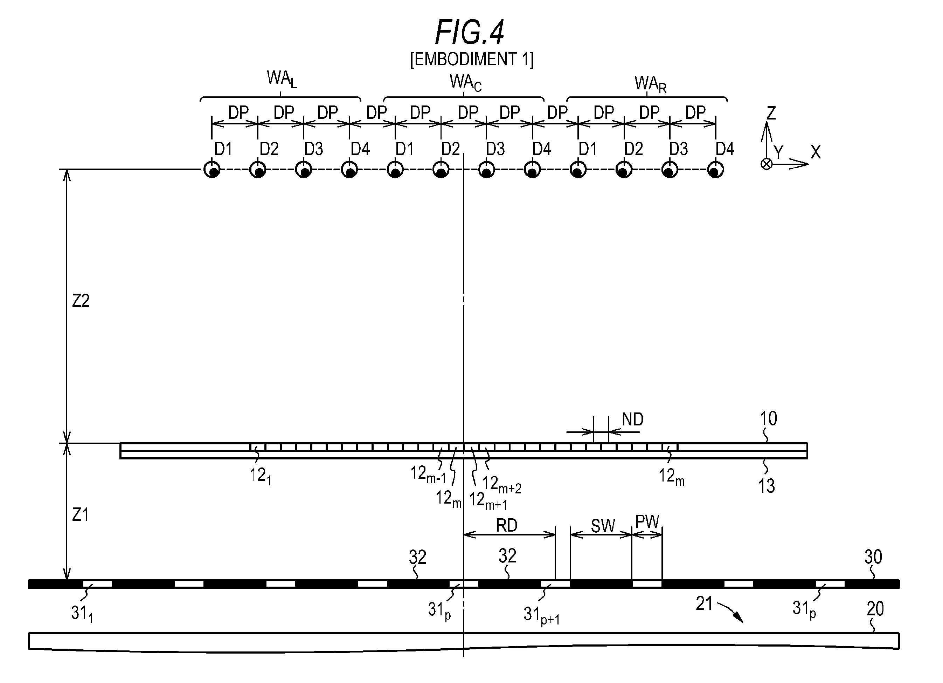

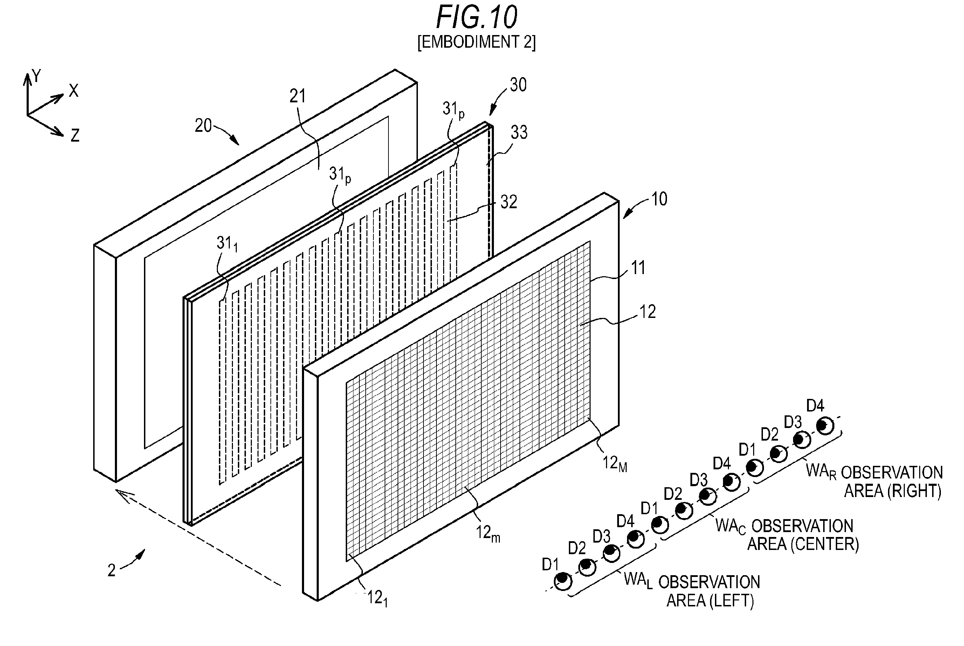

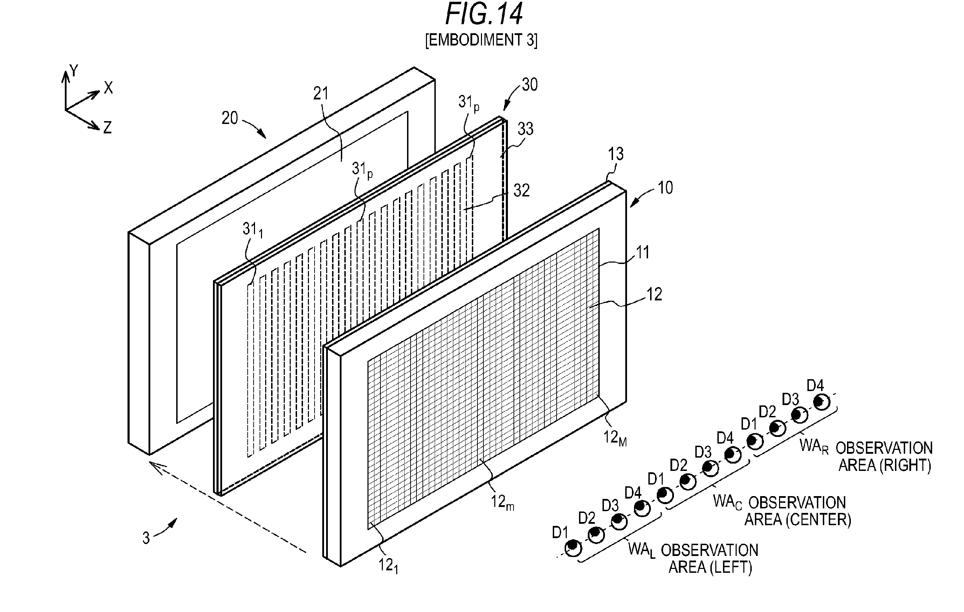

Embodiment 1 relates to a stereoscopic image display apparatus of an embodiment of the present disclosure.

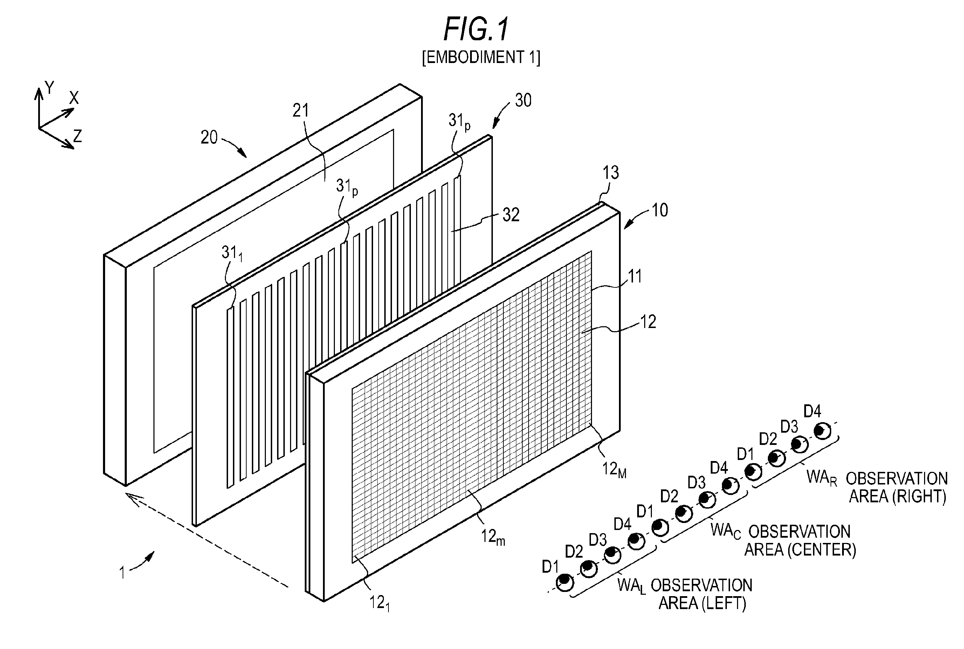

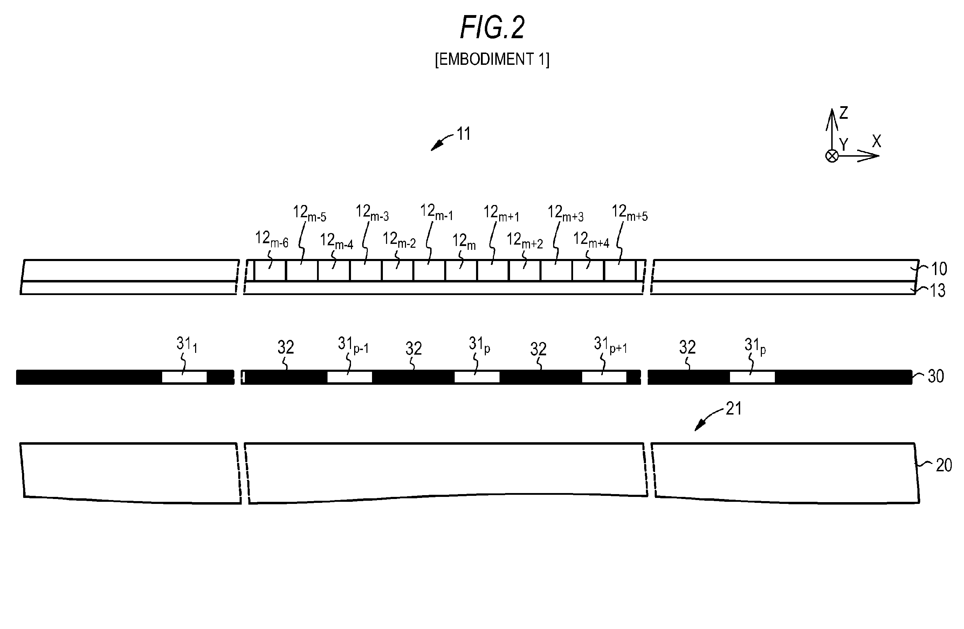

Fig. 1 is a schematic perspective view when a stereoscopic image display apparatus 1 of embodiment 1 is virtually separated. Fig. 2 is a schematic end surface view of a part of the stereoscopic image display apparatus 1 for explanation of an arrangement relation among a transmissive display panel 10, a parallax barrier 30, and a planar illumination device 20 in the stereoscopic image display apparatus 1 of embodiment 1.
As shown in Fig. 1, the stereoscopic image display apparatus 1 of embodiment 1 includes the transmissive display panel 10, the planar illumination device 20 that illuminates the transmissive display panel 10 from the rear surface, and the parallax barrier 30 that is provided between the transmissive display panel 10 and the planar illumination device 20 and separates an image displayed on the transmissive display panel 10 into images for plural viewpoints. Further, an antireflection coating is provided on at least one of the surface of the transmissive display panel 10 opposed to the parallax barrier 30 and the surface of the parallax barrier 30 opposed to the transmissive display panel 10. In embodiment 1, an antireflection coating 13 is provided on the surface of the transmissive display panel opposed to the parallax barrier 30.
In a display area 11 of the transmissive display panel 10, M pixels 12 are arranged in the horizontal direction (X direction in the drawing) and N pixels 12 are arranged in the vertical direction (Y direction in the drawing). The pixel 12 in the mth column (here, m = 1, 2, ..., M) is denoted by "pixel $12_m$".
The transmissive display panel 10 includes an active matrix color liquid crystal display panel. Each pixel 12 includes a set of the red light emission sub-pixel, the green light emission sub-pixel, and the blue light emission sub-pixel (not shown).
The transmissive display panel 10 includes a front panel at the observation area side, a rear panel at the parallax barrier 30 side, a liquid crystal material provided between the front panel and the rear panel, etc. For convenience of illustration, the transmissive display panel 10 is shown as a single panel in Fig. 1. This is the same as those in Figs. 10 and 14, which will be described later.
The antireflection coating 13 is formed by appropriately stacking a layer with a high refractive index of titanium oxide or the like and a layer with a low refractive index of magnesium fluoride or the like on a film-like base material of polyethylene terephthalate (PET), for example. Further, the film-like base material and the rear panel forming the transmissive display panel 10 are bonded. Note that, for convenience of illustration, the antireflection coating 13 is shown as a single layer in Fig. 1. This is the same as those in other drawings, which will be described later.
The parallax barrier 30 includes striped openings 31 extending in the vertical direction (Y direction in the drawing) and light blocking parts 32 located between the openings 31. The plural (P) openings 31 are arranged side by side in the horizontal direction (X direction in the drawing). The opening 31 in the pth column (here, p = 1, 2, ..., P) is denoted by "opening $31_p$". The relation between "P" and "M" described above will be explained later with reference to Figs. 4, 5, and 6.
The parallax barrier 30 is formed by forming a photosensitive material layer containing a black pigment on a PET film, for example, and then, removing the photosensitive material layer while leaving the light blocking parts 32 by the combination of photolithography and etching. The parts from which the photosensitive material layer has been removed are the openings 31.
Note that, in Fig. 2, illustration of the PET film as the base material of the parallax barrier 30 is omitted and the openings 31 and the light blocking parts 32 are schematically shown. Further, for clarification of the light blocking state and the light transmission state, the light blocking parts 32 are shown in black. This is the same as those in Figs. 3A to 9, 11 to 13, 15, and 16, which will be described later.
The planar illumination device 20 includes members (not shown) such as a light source, a prism sheet, a diffusion sheet, and a light guide plate. The diffused light via the diffusion sheet etc. is illuminated from a light emission surface 21 toward the rear surface of the transmissive display panel 10. When part of the light of the planar illumination device 20 is blocked by the parallax barrier 30, the image to be displayed on the transmissive display panel 10 is separated into images for plural viewpoints.
When the light from the planar illumination device 20 passes through the openings 31 of the parallax barrier 30 and enters the transmissive display panel 10, part of the light is reflected to be reflected light that illuminates the parallax barrier 30. However, the antireflection coating 13 is provided on the surface of the transmissive display panel 10, and thus, the reflected light may be reduced. Thereby, the influence of the reflected light in the light blocking parts 32 may be reduced and the degradation of directionality of parallax images may be reduced.
Fig. 3A is a schematic diagram for explanation of reflected light illuminating the parallax barrier 30 when no antireflection coating 13 is provided. Fig. 3B is a schematic diagram for explanation of reduction of the reflected light illuminating the parallax barrier 30 and reduction of brightness of the light blocking parts 32 when the antireflection coating 13 is provided.

As shown in Fig. 3A, the light output from the light emission surface 21 of the planar illumination device 20 passes through the openings 31 of the parallax barrier 30 and enters the transmissive display panel 10. Part of the light entering the transmissive display panel 10 is reflected by the surface of the transmissive display panel 10 and illuminates the parallax barrier 30. Part of reflected light 40 is reflected on the light blocking parts 32 of the parallax barrier 30 again to be light 41 toward the transmissive display panel 10. The light 41 is transmitted through the transmissive display panel 10 and the directionality of the images for the respective viewpoints is degraded. Note that, for convenience of illustration, the reflected light 40 and the light 41 are shown to have directionality, however, typically, they are diffused light.

On the other hand, when the antireflection coating 13 is provided, as shown in Fig. 3B, reflection of the light passing through the openings 31 of the parallax barrier 30 and entering the transmissive display panel 10 is reduced. Accordingly, the reflected light 40 is reduced compared to that in Fig. 3A and, as a result, the light 41 reflected on the light blocking parts 32 again is also reduced. Thereby, the degradation of directionalityof the images for the respective viewpoints may be reduced.

Note that the distance between the light emission surface 21 and the transmissive display panel 10, the pitch of the pixels 12 in the X direction in the drawings (hereinafter, may be simply referred to as "pixel pitch"), and the pitch of the openings 31 in the X direction in the drawings (hereinafter, may be simply referred to as "opening pitch") are set to satisfy the condition for observation of preferable stereoscopic images in the observation area defined in the specifications of the transmissive display panel 10. This condition will be specifically explained.

In embodiment 1, the case where the number of viewpoints of the images displayed on the stereoscopic image display apparatus is four of viewpoints D1, D2, D3, and D4 in the respective observation areas $WA_L$, $WA_C$, $WA_R$ shown in Fig. 1 will be explained, however, not limited to the case. The number of observation areas and the number of viewpoints may be appropriately set according to the design of the stereoscopic image display apparatus.

Fig. 4 is a schematic plan view for explanation of an arrangement relation among the viewpoints D1, D2, D3, D4 in the observation areas $WA_L$, $WA_C$, $WA_R$, the transmissive display panel 10, the parallax barrier 30, and the planar illumination device 20 shown in Fig. 1.

For convenience of explanation, an odd number of the openings 31 are arranged side by side in the X direction, and the opening $31_p$ in the pth column is located at the center between the opening $31_1$ and the opening $31_p$. Further, a boundary between the pixel $12_m$ in the mth column and the pixel $12_{m+1}$ in the (m+1) th column and a middle point between the viewpoint D2 and the viewpoint D3 in the observation area $WA_C$ are located on a virtual straight line passing through the center of the opening $31_p$ and extending in the Z direction. The pixel pitch is shown by ND [mm] and the opening pitch is shown by RD [mm]. The distance between the openings 31 and the transmissive display panel 10 is shown by Z1 [mm] and the distance between the transmissive display panel 10 and the observation areas $WA_L$, $WA_C$, $WA_R$ is shown by Z2 [mm]. Further, the distances between the adjacent viewpoints in the observation areas $WA_L$, $WA_C$, $WA_R$ are shown by DP [mm].

Given that the width of the openings 31 is shown by sign PW and the width of the light blocking parts 32 is shown by sign SW, there is a relation of opening pitch RD = SW + PW. Qualitatively, the smaller the value of PW/RD = PW/(SW + PW), the more improved the directionality of the images for the respective viewpoints and the lower the brightness of the images to be observed. The value of PW/RD may be set to a preferable value as appropriate according to the specifications of the stereoscopic image display apparatus.

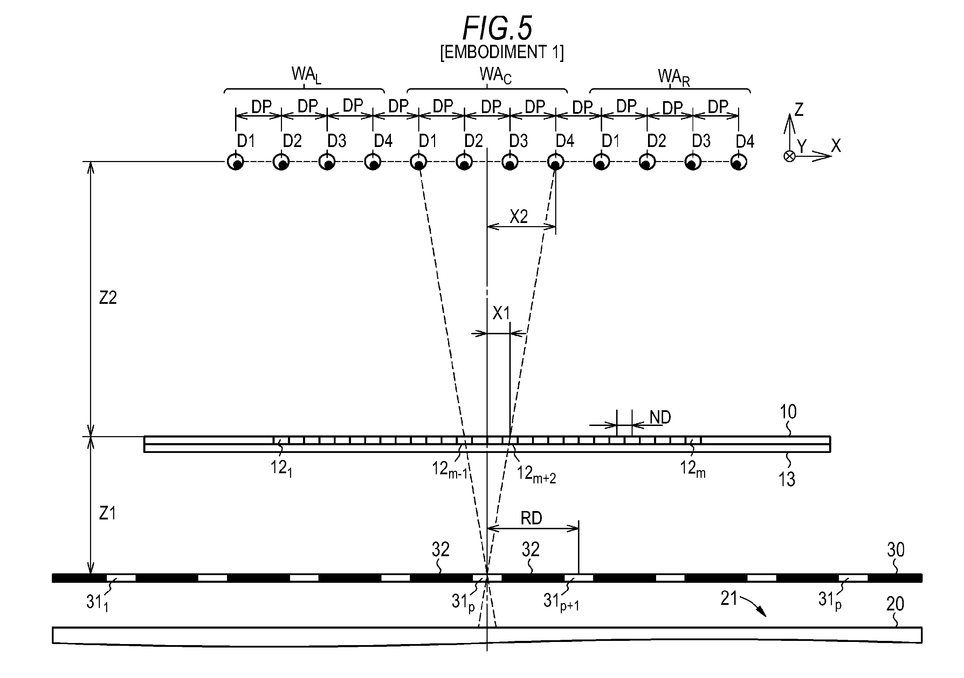

Fig. 5 is a schematic diagram for explanation of a condition satisfied so that lights from the pixels 12 may travel toward the viewpoints D1, D2, D3, D4 in the center observation area $WA_C$.

A condition for the respective lights transmitted through the pixels $12_{m-1}$, $12_m$, $12_{m+1}$, $12_{m+2}$ from the opening $31_p$ to travel toward the viewpoints D1, D2, D3, D4 in the center observation area $WA_C$ will be considered. For convenience of explanation, the width PW of the openings 31 is sufficiently small and the explanation will be made by focusing attention on the trajectories of the lights passing through the centers of the openings 31.

With reference to the virtual straight line passing through the center of the opening $31_p$ and extending in the Z direction, the distance to the center of the pixel $12_{m+2}$ is shown by sign X1 and the distance to the viewpoint D4 of the center observation area $WA_C$ is shown by sign X2. When the light from the opening $31_p$ is transmitted through the pixel $12_{m+2}$ and travels toward the viewpoint D4 of the observation area $WA_C$, the condition of the following equation (1) is satisfied from the geometric similarity relationship.

$$Z1 : X1 = (Z1 + Z2) : X2 \quad (1)$$

Here, X1 = 1.5 x ND and X2 = 1.5 x DP, and, in reflection thereof, the equation (1) is expressed by the following equation (1').

$$Z1 : 1.5 \times ND = (Z1 + Z2) : 1.5 \times DP \qquad (1')$$

It is geometrically clear that, when the above described equation (1') is satisfied, the respective lights transmitted through the pixels $12_{m-1}$, $12_m$, $12_{m+1}$ from the opening $31_p$ travel toward the viewpoints D1, D2, D3 in the observation area $WA_C$.

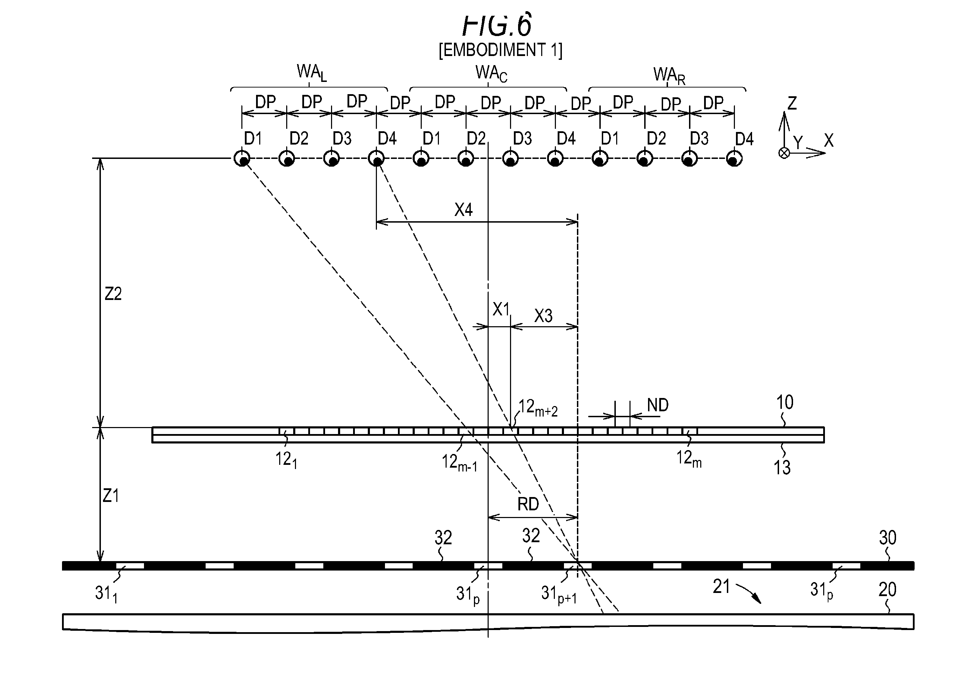

Fig. 6 is a schematic diagram for explanation of a condition satisfied so that lights from the pixels 12 may travel toward the viewpoints D1, D2, D3, D4 in the left observation area $WA_L$.

A condition for the respective lights transmitted through the pixels $12_{m-1}$, $12_m$, $12_{m+1}$, $12_{m+2}$ from the opening $31_{p+1}$ to travel toward the viewpoints D1, D2, D3, D4 in the left observation area $WA_L$ will be considered.

With reference to a virtual straight line passing through the center of the opening $31_{p+1}$ and extending in the Z direction, the distance to the center of the pixel $12_{m+2}$ is shown by sign X3 and the distance to the viewpoint D4 of the left observation area $WA_L$ is shown by sign X4. For the light from the opening $31_{p+1}$ to be transmitted through the pixel $12_{m+2}$ and travel toward the viewpoint D4 of the observation area $WA_L$, the condition of the following equation (2) is satisfied from the geometric similarity relationship.

$$Z1 : X3 = (Z1 + Z2) : X4 \quad (2)$$

Here, X3 = RD - X1 = RD - 1.5 x ND and X4 = RD + 2.5 x DP, and, in reflection thereof, the equation (2) is expressed by the following equation (2').

$$Z1 : (RD - 1.5 \times ND) = (Z1 + Z2) : (RD + 2.5 \times DP)$$
$$(2')$$

It is geometrically clear that, when the above described equation (2') is satisfied, the respective lights transmitted through the pixels $12_{m-1}$, $12_m$, $12_{m+1}$ from the opening $31_{p+1}$ travel toward the viewpoints D1, D2, D3 in the observation area $WA_L$.

Note that a condition for the respective lights transmitted through the pixels $12_{m-1}$, $12_m$, $12_{m+1}$, $12_{m+2}$ from the opening $31_{p-1}$ to travel toward the viewpoints D1, D2, D3, D4 in the right observation area $WA_R$ is the same as that when Fig. 6 is inverted with respect to the Z-axis, and the explanation will be omitted.

The values of the distance Z2 and the distance DP are set to predetermined values based on the specifications of the stereoscopic image display apparatus 1. Further, the value of the pixel pitch ND is determined by the structure of the transmissive display panel 10. From the equation (1') and the equation (2'), the following equation (3) and equation (4) are obtained with respect to the distance Z1 and the opening pitch RD.

$$Z1 = Z2 \times ND/(DP - ND) \qquad (3)$$

$$RD = 4 \times DP \times ND/(DP - ND) \qquad (4)$$

For example, given that the pixel pitch ND of the transmissive display panel 10 is 0.300 [mm], the distance Z2 is 600 [mm], and the distance DP is 65.0 [mm], the distance Z1 is about 2.78 [mm] and the opening pitch RD is about 1.206 [mm].

In the stereoscopic image display apparatus 1, the transmissive display panel 10 and the parallax barrier 30 are held to be separated at the above described distance Z1 using a member (not shown). The part between the antireflection coating 13 and the parallax barrier 30 is a space with no member.

Note that the distance between the light emission surface 21 of the planar illumination device 20 and the parallax barrier 30 is not particularly limited but may be set to a preferable value as appropriate according to the specifications of the stereoscopic image display apparatus 1.

In the above described example, the value of the opening pitch RD is substantially four times the value of the pixel pitch ND. Therefore, the above described "M" and "P" have a relation of $M \approx P \times 4$.

The distance Z1 and the opening pitch RD are set to satisfy the above described conditions, and the images for the predetermined viewpoints may be observed at the respective viewpoints D1, D2, D3, D4 in the observation areas $WA_L$, $WA_C$, $WA_R$.

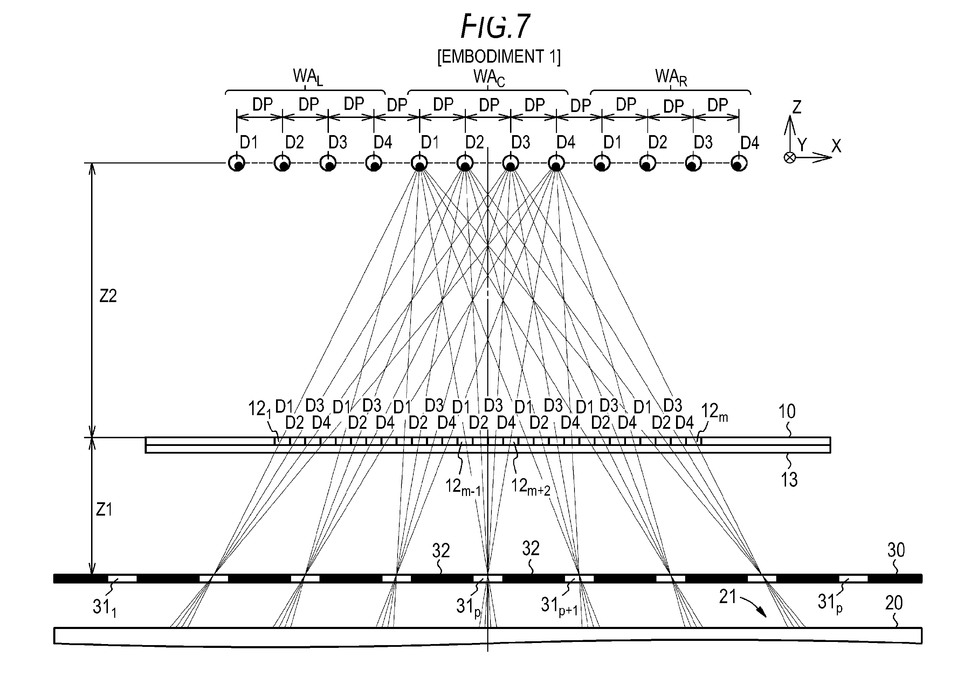

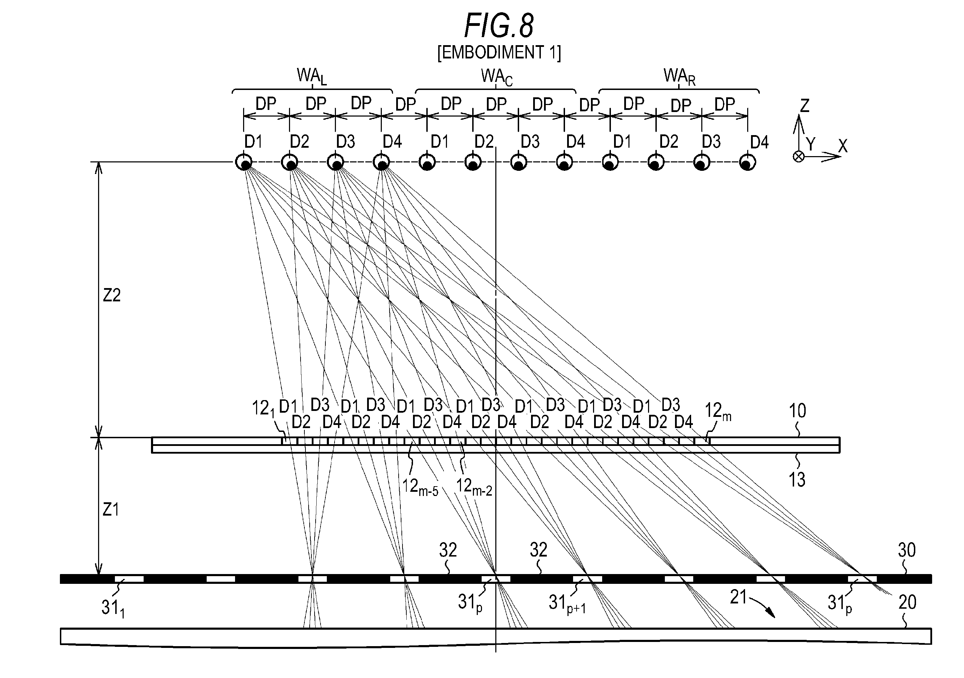

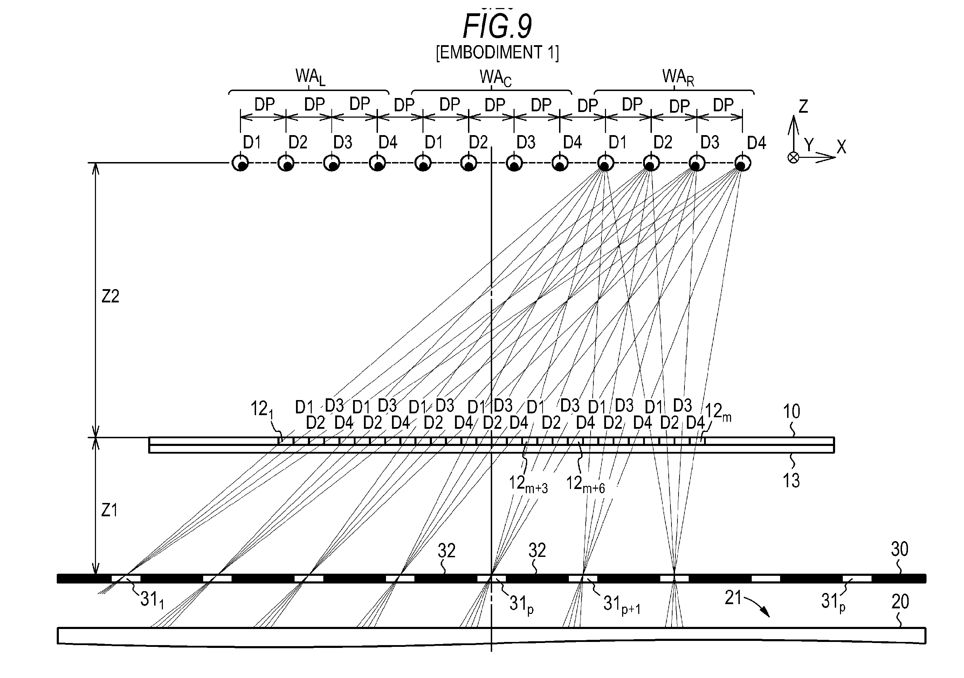

Fig. 7 is a schematic diagram for explanation of images observed at the viewpoints D1, D2, D3, D4 in the center observation area WA$_C$. Fig. 8 is a schematic diagram for explanation of images observed at the viewpoints D1, D2, D3, D4 in the left observation area WA$_L$. Fig. 9 is a schematic diagram for explanation of images observed at the viewpoints D1, D2, D3, D4 in the right observation area WA$_R$.

As shown in Figs. 7, 8, and 9, an image formed by the pixels 12 of pixels 12$_1$, 12$_5$, 12$_9$ ... is observed at the viewpoint D1 and an image formed by the pixels 12 of pixels 12$_2$, 12$_6$, 12$_{10}$ ... is observed at the viewpoint D2. Further, an image formed by the pixels 12 of pixels 12$_3$, 12$_7$, 12$_{11}$ ... is observed at the viewpoint D3 and an image formed by the pixels 12 of pixels 12$_4$, 12$_8$, 12$_{12}$ ... is observed at the viewpoint D4.

Therefore, the image for the first viewpoint is displayed using the pixels 12 of pixels 12$_1$, 12$_5$, 12$_9$ ..., the image for the second viewpoint is displayed using the pixels 12 of pixels 12$_2$, 12$_6$, 12$_{10}$ ..., the image for the third viewpoint is displayed using the pixels 12 of pixels 12$_3$, 12$_7$, 12$_{11}$ ..., and the image for the fourth viewpoint is displayed using the pixels 12 of pixels 12$_4$, 12$_8$, 12$_{12}$ ..., and thereby, an image observer recognizes the images as a stereoscopic image.

In the above explanation, the number of viewpoints has been "4", and the number of viewpoints may be selected as appropriate according to the specifications of the stereoscopic image display apparatus. For example, a configuration with the number of viewpoints "2" or a configuration with the number of viewpoints "6" may be employed. In these cases, the configuration of the parallax barrier 30 etc. may be altered as appropriate. This is the same in the other embodiments, which will be described later.

Further, in the above explanation, the configuration in which the viewpoints are changed with respect to each column of the pixels 12 has been employed, however, a configuration in which the viewpoints are changed with respect to each column of sub-pixels may be employed. Given that the pitch of the sub-pixels is 1/3 of the pixel pitch, from the calculation using the above described equation (3) and equation (4), the distance Z1 shown in Fig. 5 is about 0.92 [mm] and the light emission area pitch RD is about 0.4 [mm].

Note that, if the surface at the front panel side of the transmissive display panel 10 is subjected to the so-called anti-glare treatment, when the light travels from the transmissive display panel 10 toward the observation area, the light is diffused and the degradation of directionality of images may be visually recognized. In this case, the degradation of directionality of images may be prevented by bonding a flat and smooth film on the anti-glare-treated surface via an adhesive or the like.

[Embodiment 2]

Embodiment 2 also relates to a stereoscopic image display apparatus of an embodiment of the present disclosure. Embodiment 2 is different from Embodiment 1 in that the antireflection coating is provided on the surface of the parallax barrier opposed to the transmissive display panel. The structure of the stereoscopic image display apparatus 2 of embodiment 2 is the same as the stereoscopic image display apparatus 1 that has been explained in Embodiment 1 except the difference.

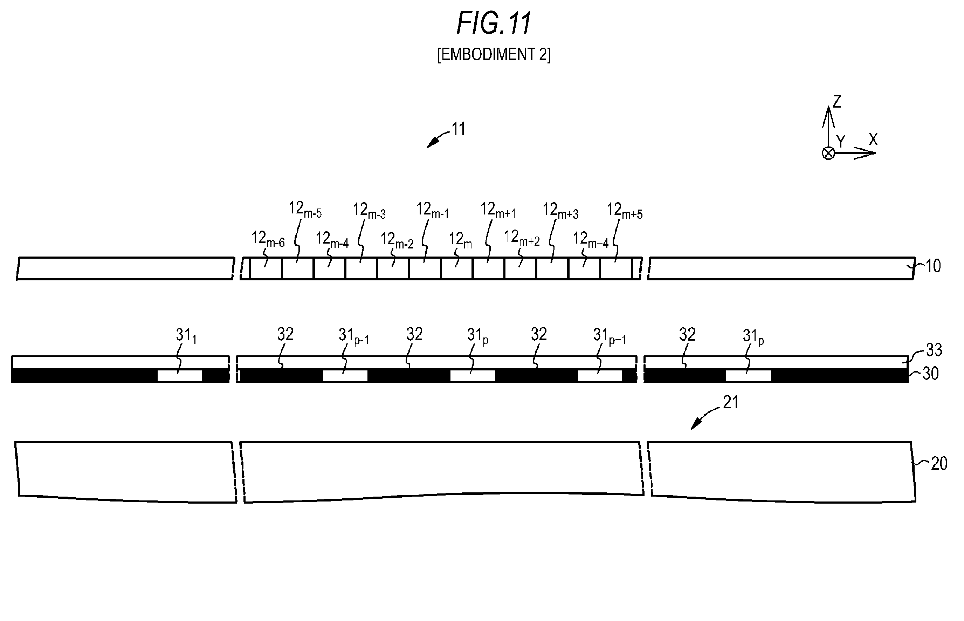

Fig. 10 is a schematic perspective view when the stereoscopic image display apparatus 2 of embodiment 2 is virtually separated. Fig. 11 is a schematic end surface view of a part of the stereoscopic image display apparatus 2 for explanation of an arrangement relation among a transmissive display panel 10, a parallax barrier 30, and a planar illumination device 20 in the stereoscopic image display apparatus 2 of embodiment 2.

The configurations, operations, and actions of the transmissive display panel 10, the planar illumination device 20, and the parallax barrier 30 in the stereoscopic image display apparatus 2 of embodiment 2 are the same as those that have been explained in embodiment 1, and their explanation is omitted here.

As shown in Figs. 10 and 11, in the stereoscopic image display apparatus 2 of the embodiment, an antireflection coating 33 is provided on the surface at the transmissive display panel 10 side of the parallax barrier 30.

The antireflection coating 33 is formed by appropriately stacking a layer with a high refractive index of titanium oxide or the like and a layer with a low refractive index of magnesium fluoride or the like on a film-like base material of polyethylene terephthalate (PET) like the antireflection coating 13 that has been explained in embodiment 1. Further, the film-like base material and the parallax barrier 30 are bonded.

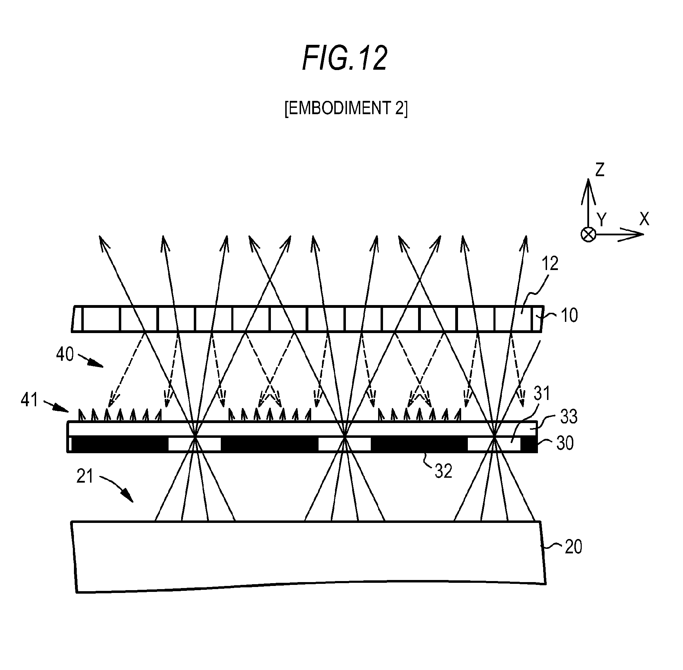

Fig. 12 is a schematic diagram for explanation of reduction of brightness of light blocking parts 41 when the antireflection coating 33 is provided.

The state of light traveling from the light blocking parts 32 toward the transmissive display panel 10 when no antireflection coating 33 is provided is the same as that in Fig. 3A referred to in embodiment 1. When the antireflection coating 33 is provided at the parallax barrier 30 side, reflected light 40 from the transmissive display panel 10 is not reduced. However, as shown in Fig. 12, light 41 reflected on the light blocking parts 32 is reduced because of the existence of the antireflection coating 33. Thereby, the degradation of directionality of images for the respective viewpoints may be reduced.

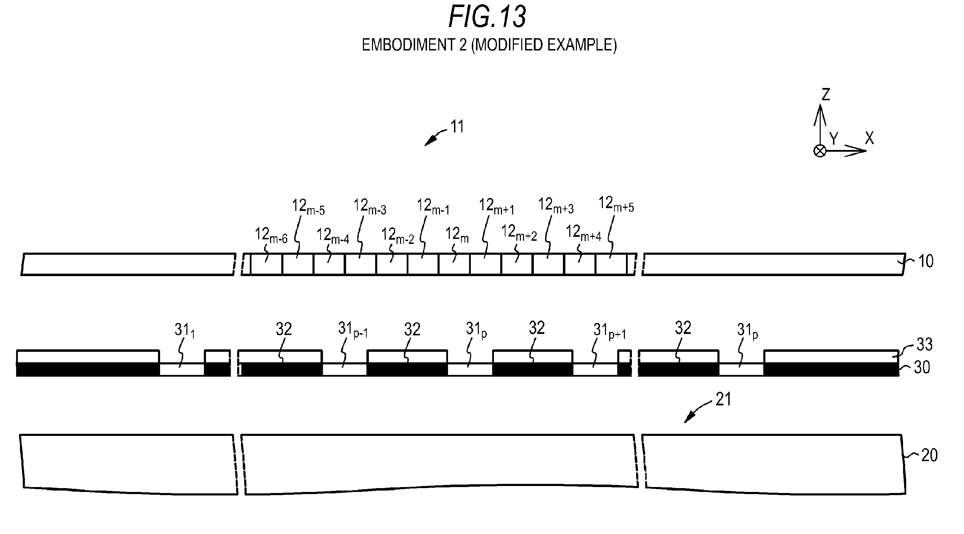

In the above explanation, the antireflection coating 33 has covered the openings 31 and the light blocking parts 32 of the parallax barrier 30, however, as shown in Fig. 13, the antireflection coating 33 may be provided only in the parts of the light blocking parts 32. Typically, the light transmittance of the antireflection coating is less than "1", and, in view of improvement of the brightness of images, it is preferable that the antireflection coating 33 is not provided on the openings 31 of the parallax barrier 30. According to the configuration shown in Fig. 13, the brightness reduction of images caused by providing the antireflection coating 33 may be avoided.

[Embodiment 3]

Embodiment 3 is a modification of embodiment 1. Embodiment 3 also relates to a stereoscopic image display apparatus of an embodiment of the present disclosure. Embodiment 3 is different from embodiment 1 in that the antireflection coating is provided on the surface of the parallax barrier as has been explained in embodiment 2 to the stereoscopic image display apparatus of embodiment 1. The structure of the stereoscopic image display apparatus 3 of embodiment 3 is the same as the stereoscopic image display apparatus 1 that has been explained in Embodiment 1 except the difference.

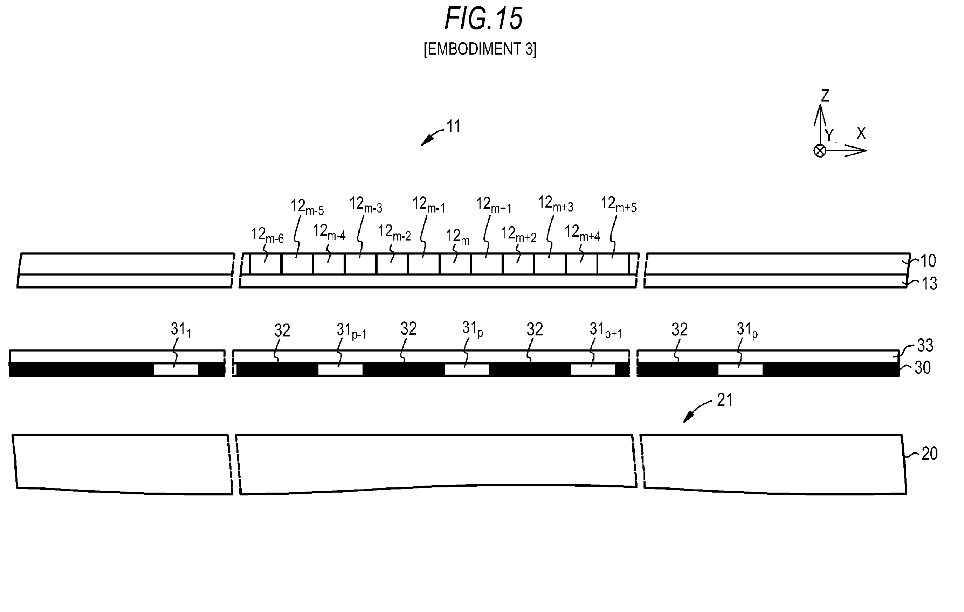

Fig. 14 is a schematic perspective view when the stereoscopic image display apparatus 3 of embodiment 3 is virtually separated. Fig. 15 is a schematic end surface view of a part of the stereoscopic image display apparatus 3 for explanation of an arrangement relation among a transmissive display panel 10, a parallax barrier 30, and a planar illumination device 20 in the stereoscopic image display apparatus 3 of embodiment 3.

The configurations, operations, and actions of the transmissive display panel 10, the antireflection coating 13 the planar illumination device 20, and the parallax barrier 30 in the stereoscopic image display apparatus 3 of embodiment 3 are the same as those that have been explained in embodiment 1, and their explanation is omitted here.

As shown in Figs. 14 and 15, in the stereoscopic image display apparatus 3 of the embodiment 3, an antireflection coating 33 is also provided on the surface at the transmissive display panel 10 side of the parallax barrier 30. The antireflection coating 33 is the same as that has been explained in embodiment 2 and its explanation will be omitted.

The effect by the antireflection coating 13 on the transmissive display panel 10 and the antireflection coating 33 on the parallax barrier 30 is a combination of the explanation referring to Fig. 3B in embodiment 1 and the explanation referring to Fig. 12 in embodiment 2, and the explanation will be omitted.

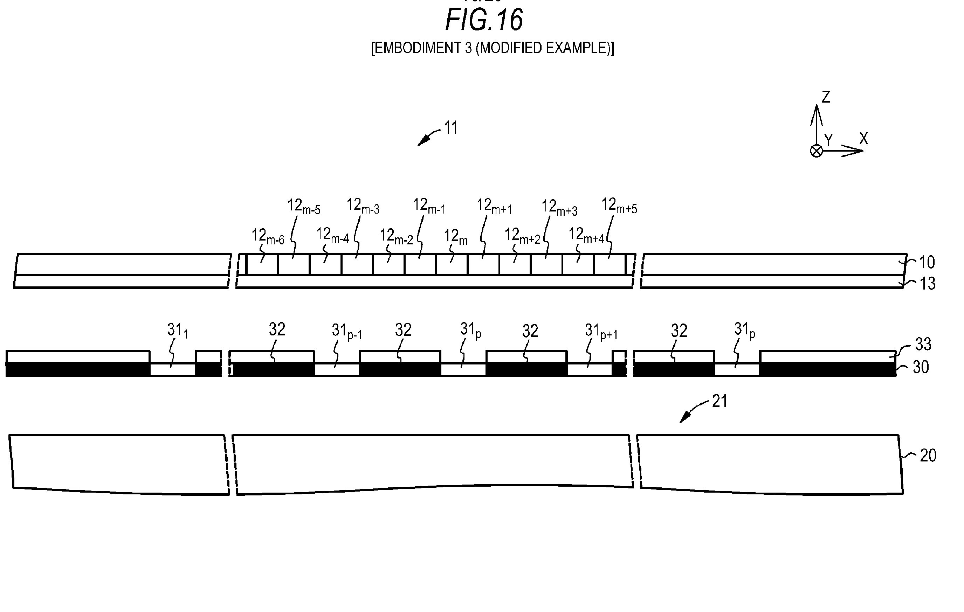

Note that, as has been explained in embodiment 2, as shown in Fig. 16, the antireflection coating 33 may be provided only in the parts of the light blocking parts 32.

The present disclosure has been explained according to the preferred embodiments, however, the present disclosure is not limited to the embodiments. The configurations and the structures of the stereoscopic image display apparatuses that have been explained in the embodiments are examples and may be changed as appropriate.

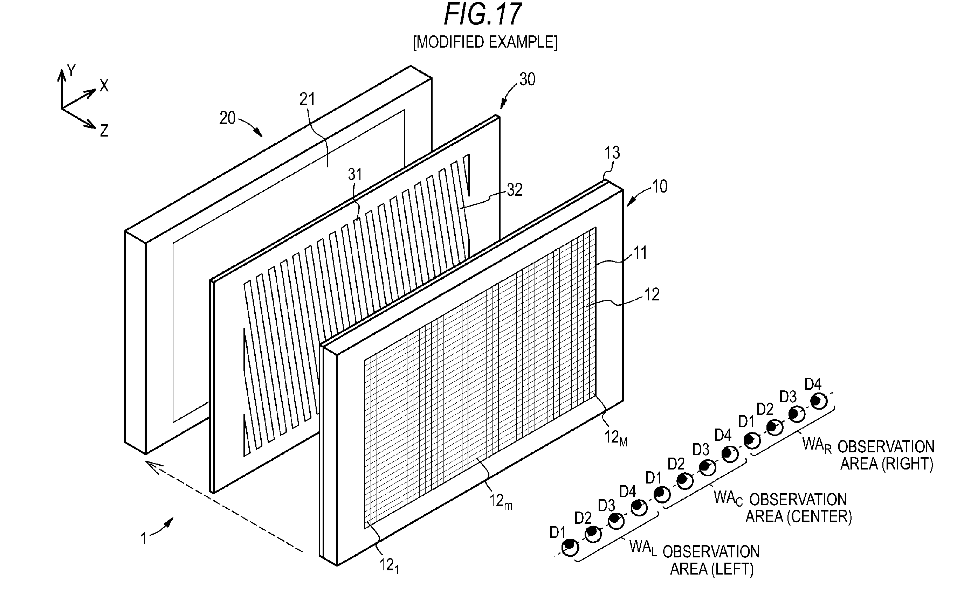

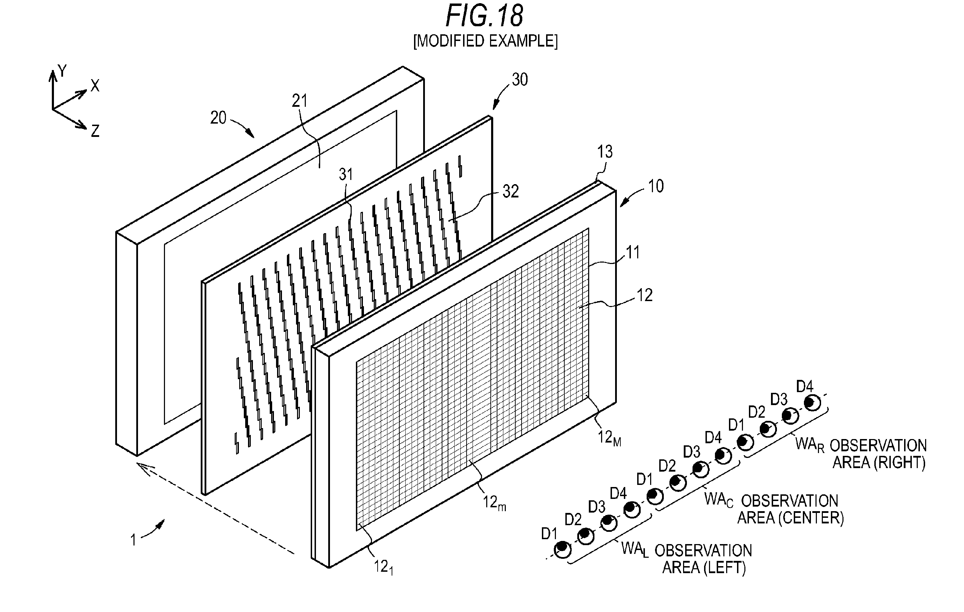

In embodiment 1, the openings 31 of the parallax barrier have striped shapes extending in the vertical direction, however, for example, as shown in Fig. 17, the openings may have shapes extending obliquely at a certain angle relative to the vertical direction. In this case, as shown in Fig. 18, the openings having pinhole shapes are arranged to be obliquely continuous, and thereby, the openings 31 obliquely extending as a whole may be employed. This is the same in the other embodiments.

The present disclosure contains subject matter related to that disclosed in Japanese Priority Patent Application JP 2010-172037 filed in the Japan Patent Office on July 30, 2010, the entire contents of which is hereby incorporated by reference.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

It should be understood by those skilled in the art that various modifications, combinations, sub-combinations and alterations may occur depending on design requirements and other factors insofar as they are within the scope of the appended claims or the equivalents thereof.

**Claims**

1. An image display apparatus comprising:

   a transmissive display panel;
   a planar illumination device that illuminates the transmissive display panel from a rear side; and
   a parallax barrier that is provided between the transmissive display panel and the planar illumination device and separates an image displayed on the transmissive display panel into images for plural viewpoints,
   wherein the parallax barrier and the transmissive display panel are provided to be opposed at a predetermined distance, and
   an antireflection coating is provided on at least one of a surface of the transmissive display panel opposed to the parallax barrier and a surface of the parallax barrier opposed to the transmissive display panel.

2. The image display apparatus according to claim 1, wherein the antireflection coating is provided on the surface of the transmissive display panel opposed to the parallax barrier.

3. The image display apparatus according to claim 1, wherein the antireflection coating is provided on the surface of the parallax barrier opposed to the transmissive display panel.

4. The image display apparatus according to claim 3, wherein the parallax barrier includes light blocking parts and openings, and
   the antireflection coating is provided only in parts corresponding to the light blocking parts of the parallax barrier.

5. The image display apparatus according to claim 1, wherein the antireflection coatings are provided on the surface of the transmissive display panel opposed to the parallax barrier and the surface of the parallax barrier opposed to the transmissive display panel.

6. The image display apparatus according to claim 5, wherein the parallax barrier includes light blocking parts and openings, and
   the antireflection coating provided on the surface of the parallax barrier is provided only in parts corresponding to the light blocking parts of the parallax barrier.

## FIG.1

[EMBODIMENT 1]

EP 2 413 608 A2

## FIG.2

[EMBODIMENT 1]

EP 2 413 608 A2

[EMBODIMENT 1]
## FIG.3A

## FIG.3B

FIG.4
[EMBODIMENT 1]

# FIG.5
## [EMBODIMENT 1]

FIG.6
[EMBODIMENT 1]

FIG.7

[EMBODIMENT 1]

EP 2 413 608 A2

FIG.8
[EMBODIMENT 1]

FIG.9
[EMBODIMENT 1]

FIG.10
[EMBODIMENT 2]

10
11
12
30
33
32
31_p
31_p
21
20
31_1
12_M
12_m
12_1
2

X
Y
Z

D4
D3
D2
D1
WA_R OBSERVATION AREA (RIGHT)

D4
D3
D2
D1
WA_C OBSERVATION AREA (CENTER)

D4
D3
D2
D1
WA_L OBSERVATION AREA (LEFT)

*FIG.11*

[EMBODIMENT 2]

# FIG.12

[EMBODIMENT 2]

FIG.13

EMBODIMENT 2 (MODIFIED EXAMPLE)

*FIG.14*
[EMBODIMENT 3]

# FIG.15

[EMBODIMENT 3]

## FIG.16

[EMBODIMENT 3 (MODIFIED EXAMPLE)]

*FIG.17*

[MODIFIED EXAMPLE]

EP 2 413 608 A2

## FIG.18
[MODIFIED EXAMPLE]

## FIG.19A

IMAGE DISPLAY UNIT   PARALLAX BARRIER

LIGHT BLOCKING PART
OPENING

L10
R9
L8
R7
L6
R5
L4
R3
L2
R1

DR
SECOND VIEWPOINT

DL
FIRST VIEWPOINT

## FIG.19B

PARALLAX
BARRIER

PLANAR ILLUMINATION DEVICE

TRANSMISSIVE
DISPLAY PANEL

L10
R9
L8
R7
L6
R5
L4
R3
L2
R1

DR
SECOND VIEWPOINT

DL
FIRST VIEWPOINT

OPENING

LIGHT BLOCKING PART

## FIG.20

PARALLAX BARRIER

PLANAR ILLUMINATION DEVICE

REFLECTED LIGHT

TRANSMISSIVE DISPLAY PANEL

LIGHT VISUALLY RECOGNIZED BY REFLECTED LIGHT ILLUMINATING LIGHT BLOCKING PART

L10
R9
L8
R7
L6
R5
L4
R3
L2
R1

DR
SECOND VIEWPOINT

DL
FIRST VIEWPOINT

OPENING

LIGHT BLOCKING PART

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5122733 A
- JP 3565391 B

- JP 2010172037 A